# EUROPEAN PATENT APPLICATION

(11) **EP 3 543 102 A1**
(43) Date of publication of application: **25.09.2019**
(21) Application number: 18162638.3
(22) Date of filing: 19.03.2018
(51) Int. Cl.: B62K 9/00, B62K 9/02, B62K 13/04

(54) **REAR WHEEL STRUCTURE OF WALKER BIKE**

(71) Applicant: Deng, Jenung, 106 Taipei City (TW)
(72) Inventor: Deng, Jenung, 106 Taipei City (TW)
(74) Representative: Banse & Steglich Patentanwälte PartmbB

(57) **Abstract**

A rear wheel structure (1) of a walker bike (9) comprising a left (2) and a right (3) supports. The left support comprises a left linking rod (21) connected to a left pole (92) of the walker bike and a left shaft (22) perpendicular to the left linking rod and axially connected to a left rear wheel (95). The right support is bilaterally symmetrical to the left support horizontally and includes a right linking rod (31) connected to a right pole (93) of the walker bike and a right shaft (32) perpendicular to the right linking rod and axially connected to a right rear wheel (96). Thus, the left and right rear wheels are located respectively on two sides of the left and right supports, or the left and the right rear wheels are arranged side by side in an interval between the left and the right poles, serving learning and utilization purposes for children of different stages.

## Description

### BACKGROUND OF THE INVENTION

### Field of the Invention

The present invention relates to a rear wheel structure of a walker bike, and more particularly, to a rear wheel structure with a changeable configuration for a walker bicycle so as to serve learning and utilization purposes for children of different stages.

### Description of the Related Art

To help children learn to walk and develop the sense of balance, many parents provide walker bikes as assistance tools. There is further a walker tricycle available. A walker tricycle includes a front wheel, a left rear wheel and a right rear wheel, but does not include driving elements such as pedals, chainrings and chains. Thus, such type of walker bikes is quite safe and stable. Because the above driving elements are not included, a child is required to hold handles with both hands in order to control a traveling direction, and to continuously tread and push the ground by both feet for thrust, and thus driving the walker tricycle to move forward and achieving the object of learning to walk.

When a child grows to a stage of being able to walk on one's own, the above walker tricycle may no longer satisfy the needs of the child. However, at this stage, a common bicycle is yet unsafe and inappropriate for the child. Thus, parents often additionally purchase another walker bicycle similarly without driving elements so as to assist and reinforce the sense of balance of the child. As such, the used walker tricycle is discarded and results in waste, whereas the additionally purchased walker bicycle adds an economical burden.

### SUMMARY OF THE INVENTION

In view of the above, to provide a structure different from the prior art, the applicant discloses, based on many years of experience and constant improvement, the present invention for improving the above drawbacks.

It is an object of the present invention to provide a rear wheel structure of a walker bike, so as to solve issues of separate purchases for a walker tricycle and a walker bicycle that result in resource waste and an economical burden, thereby effectively prolonging the application life cycle of a walker bike as well as reducing resource waste and purchasing costs.

To achieve the above object, the rear wheel structure of a walker bike of the present invention includes a left support and a right support. A rear end of the walker bike includes a left pole and a right pole, with an interval existing between the left pole and the right pole. The left support includes a left linking rod and a left shaft. A front end of the left linking rod is connected to the left pole, and the left shaft is perpendicular to a rear end of the left linking rod and is axially connected to a left rear wheel. The right support is bilaterally symmetrical to the left support in the horizontal direction. The right support includes a right linking rod and a right shaft. A front end of the right linking rod is connected to the right pole, and the right shaft is perpendicular to a rear end of the right linking rod and is axially connected to a right rear wheel. Thus, the left rear wheel is located on the left side of the left support and the right rear wheel is located on the right side of the right support, or the left rear wheel and the right rear wheel are arranged side by side in the interval between the left pole and the right pole.

In implementation, the front end of the left linking rod is connected to the left pole by means of rotation and positioning, and the front end of the right linking rod is connected to the right pole by means of rotation and positioning. Further, the left rear wheel is axially connected to a left end of the left shaft to locat the left rear wheel on the left side of the left support, and the right rear wheel is axially connected to a right end of the right shaft to locate the right rear wheel on the right side of the right support.

In implementation, the front end of the left linking rod is provided with a first left positioning portion, and a rear end of the left pole is provided with a second left positioning portion for positioning the first left positioning portion; the front end of the right linking rod is provided with a first right positioning portion, and a rear end of the right pole is provided with a second right positioning portion for positioning the first right positioning portion.

In implementation, the first left positioning portion and the second left positioning portion are a spiral combination, and the first right positioning portion and the second right positioning portion are a spiral combination. The first left positioning portion may also be at least one flexible button at the front end of the left linking rod, and the second left positioning portion is two first through holes formed at the rear end of the left pole and for positioning the at least one first flexible button. The first right positioning portion may also be at least one second flexible button, and the second right positioning portion are two second through holes formed at the rear end of the right pole and for positioning the at least one second flexible button.

In implementation, the left linking rod of the left support is parallel to the right linking rod of the right support.

To further understand the present invention, preferred embodiments are given with the accompanying drawings and denotations below to describe specific constituting contents and expected results of the present invention.

### BRIEF DESCRIPTION OF THE DRAWINGS

FIG. 1 is a perspective appearance diagram of a preferred embodiment of the present invention connected to a rear end of a walker bike.
FIG. 2 is a top schematic diagram of a preferred embodiment of the present invention.
FIG. 3 is a diagram of use of a preferred embodiment of the present invention.
FIG. 4 is another perspective appearance diagram of a preferred embodiment of the present invention.

### DETAILED DESCRIPTION OF THE INVENTION

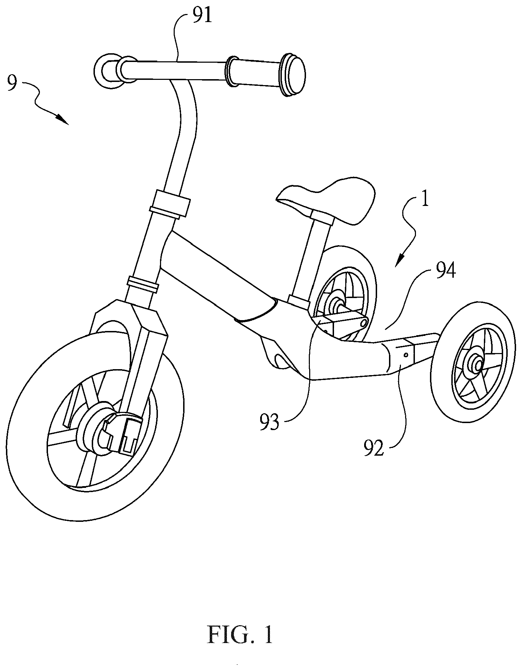

FIG. 1 shows a walker bike rear wheel structure 1 according to an embodiment of the present invention. Referring to FIG. 1, a bike front 91 of a walker bike 9 is defined as a front end, a bike tail is defined as a rear end, and a left side and a right side of the walker bike 9 and the present invention are defined according to a direction of a user facing the bike front 91. The rear end of the walker bike 9 is divided towards the back into a left pole 92 and a right pole 93 that are parallel, and an interval 94 exists between the left pole 92 and the right pole 93.

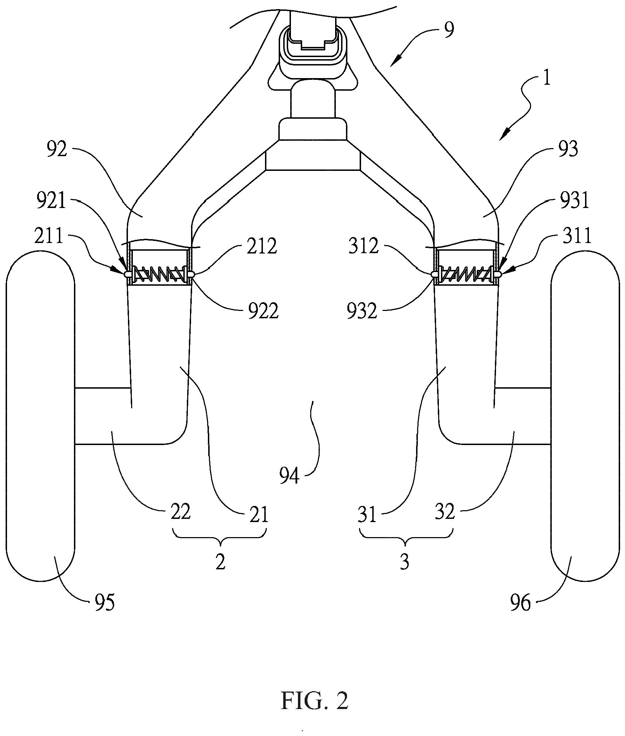

Referring to FIG. 2, the walker bike rear wheel structure 1 of the present invention includes a left support 2 and a right support 3. The left support 2 is an L-shaped tube, and includes a left linking rod 21 and a left shaft 22. A front end of the left linking rod 21 is provided with a first left positioning portion 211, and a rear end of the left pole 92 is provided with a second left positioning portion 921 for positioning the first left positioning portion 211. In this embodiment, the first left positioning portion 211 is two first flexible buttons 212 at the front end of the left linking rod 21; alternatively, the flexible button 212 may be in a quantity of one. The second left positioning portion 921 is two first through holes 922 formed at a rear end of the left pole 92 to accordingly positioning the at least one first flexible button 212.In implementation, the first left positioning portion 211 and the second left positioning portion 921 may also be a spiral combination of an outer thread and an inner thread, thus similarly connecting the front end of the left linking rod 21 to the rear end of the left pole 92 by means of rotation and positioning. The left shaft 22 is perpendicular to the left linking rod 21 and extends from the rear end of the left linking rod 21 towards the left. A left end of the left shaft 22 is axially connected to a left rear wheel 95 so as to locate the left rear wheel 95 on the left side of the left support 2.

The right support 3 is bilaterally symmetrical to the L-shaped tube of the left support 2 in the horizontal direction. The right support 3 includes a right linking rod 31 and a right shaft 32. The right linking rod 31 is parallel to the left linking rod 21 of the left support 2. The front end of the right linking rod 31 is provided with a first right positioning portion 311, and a rear end of the right pole 93 is provided with a second right positioning portion 931 for positioning the first right positioning portion 311. In this embodiment, the first right positioning portion 311 is two flexible buttons 312 at the front end of the right linking rod 31; alternatively, the second flexible button 312 may also be in a quantity of one. The second right positioning portion 931 is two second through holes 932 formed at the rear end of the right pole 93 so as to position the at least one second flexible button 312. In implementation, the first right positioning portion 311 and the second right positioning portion 931 may also be a spiral combination of an outer thread and an inner thread, such that the front end of the right linking rod 31 may be connected to the rear end of the right pole 93 similarly by means of rotation and positioning. The right shaft 32 is perpendicular to the right linking rod 31 and extends from the rear end of the right linking rod 31 towards the right. A right end of the right shaft 32 is axially connected to a right rear wheel 96 so as to locate the right rear wheel 96 on the right side of the right support 3. Thus, the three-wheel walking tricycle 9 is formed.

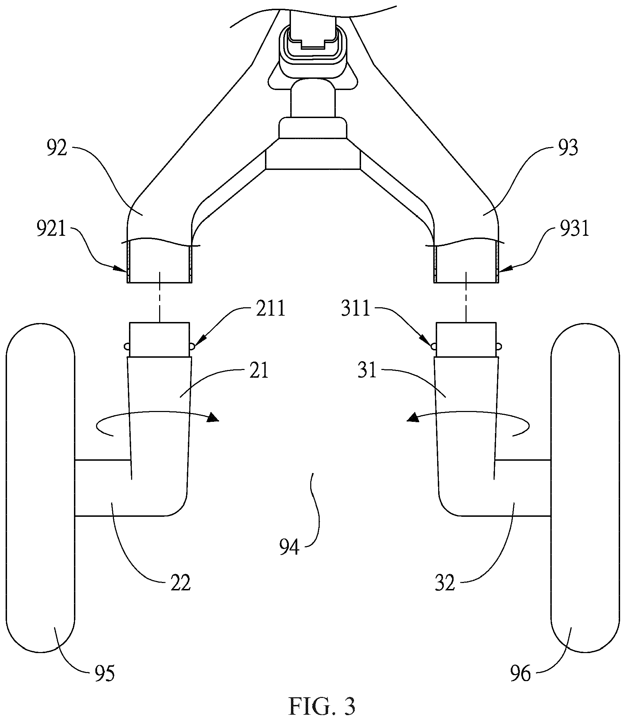

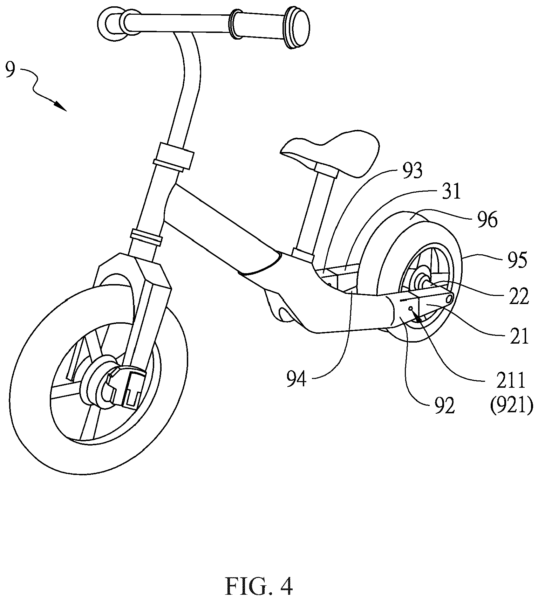

As shown in FIG. 3 and FIG. 4, when a user separates the first left positioning portion 211 of the left linking rod 21 from the second left positioning portion 921 of the left pole 92, the left linking rod 21 is turned to rotate the left shaft 22 and the left rear wheel 95 by 180 degrees in the horizontal direction, and the first left positioning portion 211 and the second left positioning portion 921 are again positioned. Meanwhile, the first right positioning portion 311 of the right linking rod 31 and the second right positioning portion 931 of the right pole 93 are separated, the right linking rod 31 is turned to rotate the right shaft 32 and the right rear wheel 96 by 180 degrees in the horizontal direction, and the first right positioning portion 311 and the second right positioning portion 931 are again positioned. Thus, the left rear wheel 95 and the right rear wheel 96 can be arranged side by side in the interval 94 between the left pole 92 and the right pole 93, forming a walker bicycle 9 equivalent to a two-wheel one having a front wheel and a rear wheel.

Based on the above structure, the present invention, as the contents described in the disclosure, achieves expected objects, providing a walker bike rear wheel structure suitable for a three-wheel walker tricycle, and capable of forming a walker bicycle equivalent to a two-wheel one having a front wheel and a rear wheel. Thus, the present invention effectively prolongs a utilization life cycle of a walker bike, reduces resource waste and purchasing costs, and offers industrial applicability.

While the invention has been described by way of example and in terms of the preferred embodiments, it is to be understood that the structural features of the present invention are not limited thereto. On the contrary, it is intended to cover various modifications and similar arrangements and procedures, and the scope of the appended claims therefore should be accorded the broadest interpretation so as to encompass all such modifications and similar arrangements and procedures.

## Claims

1. A rear wheel structure of a walker bike, a rear end of the walker bike having a left pole and a right pole, an interval existing between the left pole and the right pole; **characterized in that** the rear wheel structure of the walker bike comprises:
a left support, comprising a left linking rod and a left shaft, a front end of the left linking rod connected to the left pole, the left shaft being perpendicular to a rear end of the left linking rod, the left shaft axially connected to a left rear wheel; and
a right support, the right support being bilaterally symmetrical to the left support in a horizontal direction, the right support comprising a right linking rod and a right shaft, a front end of the right linking rod connected to the right pole, the right shaft being perpendicular to a rear end of the right linking rod, the right shaft axially connected to a right rear wheel; accordingly, the left rear wheel is located on a left side of the left support and the right rear wheel is located on a right side of the right support, or the left rear wheel and the right rear wheel are arranged side by side in the interval between the left pole and the right pole.

2. The rear wheel structure of a walker bike according to claim 1, wherein the front end of the left linking rod is connected to the left pole by means of rotation and positioning, the front end of the right linking rod is connected to the right pole by means of rotation and positioning, the left rear wheel is axially connected to a left end of the left shaft to locate the left rear wheel on the left of the left support, and the right rear wheel is axially connected to a right end of the right shaft to locate the right rear wheel on the right side of the right support.

3. The rear wheel structure of a walker bike according to claim 2, wherein the front end of the left linking rod is provided with a first left positioning portion, and a rear end of the left pole is provided with a second left positioning portion for positioning the first left positioning portion; the front end of the right linking rod is provided with a first right positioning portion, and a rear end of the right pole is provided with a second right positioning portion for positioning the first right positioning portion.

4. The rear wheel structure of a walker bike according to claim 2, wherein the first left positioning portion and the second left positioning portion form a spiral combination, and the first right positioning portion and the second right positioning portion are a spiral combination.

5. The rear wheel structure of a walker bike according to claim 2, wherein the first left positioning portion is at least one first flexible button at the front end of the left linking rod, the second left positioning portion is two first through holes formed at the rear end of the left pole for positioning the at least one flexible button; the first right positioning portion is at least one second flexible button at the front end of the right linking rod, and the second right positioning portion is two second through holes formed at the rear end of the right pole for positioning the at least one second flexible button.

6. The rear wheel structure of a walker bike according to claim 2, wherein the left linking rod of the left support is parallel to the right linking rod of the right support.

7. The rear wheel structure of a walker bike according to claim 1, wherein the left linking rod of the left support is parallel to the right linking rod of the right support.
